Europäisches Patentamt

European Patent Office

Office européen des brevets

(19)

(11) Numéro de publication: **0 012 097**
**B1**

(12) **FASCICULE DE BREVET EUROPEEN**

(45) Date de publication du fascicule du brevet: **30.11.83**

(51) Int. Cl.³: **B 62 M 3/08**

(21) Numéro de dépôt: **79430014.5**

(22) Date de dépôt: **31.07.79**

(54) Pédale de sécurité à verrouillage par action du pied.

(30) Priorité: **01.08.78 FR 7823423**

(43) Date de publication de la demande:
**11.06.80 Bulletin 80/12**

(45) Mention de la délivrance du brevet:
**30.11.83 Bulletin 83/48**

(84) Etats contractants désignés:
**BE DE IT NL**

(56) Documents cités:
**FR - A - 2 279 607**
**FR - A - 2 310 914**
**FR - A - 2 373 440**

(73) Titulaire: **Righezza, Jean**
**16, avenue Moisseron**
**F-13009 Marseille (FR)**

(72) Inventeur: **Righezza, Jean**
**16, avenue Moisseron**
**F-13009 Marseille (FR)**

Courier Press, Leamington Spa, England.

Pédale de sécurité à verrouillage par action du pied

La présente invention concerne toute application industrielle ou sportive, notamment pour pédale de bicyclette.

Les pédales et cale-pieds itilisés notamment en course de cyclisme ont pour inconvénients de faire appel à une main de l'usager afin d'actionner le système de blocage du pied sur la pédale, opération longue et dangereuse suivant l'état de la route et de sa vitesse. Le dispositif actuel a pour autre inconvénient les difficultés rencontrées lors de la mise en place du pied dans le cale-pied, du fait que l'ensemble pédale/cale-pied se trouve du côté opposé au pied, et ce de par la position de leur centre de gravité.

En cas de chute, ou dans le cas d'un besoin urgent de mettre pied à terre, le dispositif conventionnel ne permet pas une intervention rapide et l'usager se trouve attaché à sa machine. Pour éviter ces inconvénients les utilisateurs sont obligés de serrer leurs cale-pieds avant une montée et de les desserrer avant une descente dangereuse. Ces opérations nécessitent de nombreuses interventions acrobatiques.

D'autres techniques de fixation, telle que prévu dans le brevet FR—A—2279607 prévoit la fixation du pied sur la pédale par l'intermédiaire d'un cale-pied de forme complémentaire et dont le verrouillage et de déverrouillage sont obtenus par une certaine rotation du pied et de par son dégagement dans cette position.

La présente invention supprime tous les inconvénients cités ci-dessus et en particulier celui d'avoir à présenter le pied de biais par rapport à la pédale lors de son introduction et de son enlèvement comme cela est le cas dans le brevet déjà cité.

Le présent dispositif permet à l'utilisateur de verrouiller ou de déverrouiller le système de blocage du cale-pied tout en gardant le cale-pied engagé sur son support et les mains sur le guidon, car l'action de blocage ou de déblocage est commandée par le pied. De plus l'engagement du cale-pied ou son dégagement se trouve facilité du fait qu'ils se font toujours parallèlement au plan de pédalage.

La présente invention comprend un ensemble constitué d'une pédale de bicyclette et de son cale-pied dont la pédale comprend un plateau disposé parallèlement à la semelle du soulier du cycliste et ayant une forme complémentaire à celle du cale-pied pour l'accouplement du cale-pied à la pédale dans une position normale de pédalage. Le plateau est solidaire d'un axe de rotation qui est orthogonal à l'axe de rotation de la pédale et au plateau et le cale-pied a une forme permettant de transmettre au plateau et à son axe des mouvements de rotation alternés de part et d'autre de la position normale de pédalage, ce pivotement actionne un dispositif de blocage et de déblocage du cale-pied avec la pédale.

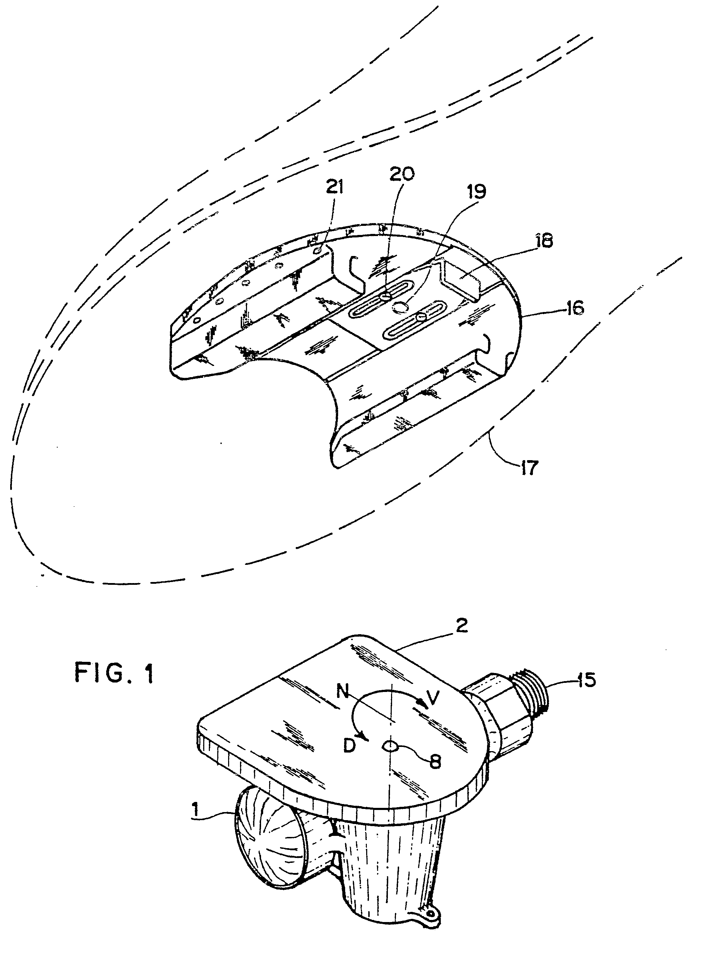

Le plateau comporte trois positions: la position normale située dans le plan de pédalage et repérée N sur la Fig. 1, deux positions de verrouillage et de déverrouillage de la chaussure, situées chacune de part et d'autre de la position normale et repérées V (verrouillage) et D (déverrouillage) sur le Fig. 1.

Après avoir engagé son pied sur la pédale, il suffira à l'utilisateur de tourner légèrement son pied pour que celui-ci se trouve bloqué.

Inversement par une rotation en sens inverse du plateau, le pied se trouve déverrouillé mais toujours en position de pédalage. Le présent dispositif permet de pédaler, la chaussure étant au gré de l'utilisateur, verrouillée ou déverrouillée.

En outre l'action de verrouillage et de déverrouillage peut être exécutée au cours du pédalage sans aucune intervention manuelle.

La géométrie générale de la pédale donne à celle-ci au repos une position facilitant la mise en place du pied.

Deux systèmes de maintien et de rappel du plateau sont prévus, l'un à action brusque, l'autre à action progressive, dont l'utilisateur aura le choix en fonction de ses préférences.

La description qui suit se réfère aux dessins schématiques annexés et représentant, à titre d'exemple non limitatif, les deux formes principales d'exécution.de cette pédale et de son cale-pied.

Pédale à action brusque

On entend par action brusque le fait que pour une faible rotation du plateau celui-ci se trouve libéré de son dispositif de maintien en position normale de pédalage. Cette disposition est obtenue, par l'interposition entre le plateau 2 et le corps de la pédale 1, de butées 7 solidaires du corps et venant s'encastrer dans des logements pratiqués dans le plateau 2.

Le plateau 2 est maintenu en contact avec les butées 7 par l'intermédiaire d'un dispositif de tension, soit par ressort 6 ou par toute matière élastique. L'ensemble ainsi constitué demande lors de la rotation du plateau un effort brusque et inversant proportionnel à l'angle de rotation du plateau pour s'annuler totalement lorsque les butées sont entièrement libérées.

Fig. 1 — Représente une vue éclatée en perspective de la pédale et de l'élément complémentaire fixé sous la chaussure.

Fig. 2 — Représente en élévation, l'ensemble de la pédale et du cale-pied, vue de l'avant.

Fig. 3 — Représente une vue partielle du corps de la pédale, vue par dessous suivant "C" le dispositif de blocage étant déverrouillé.

Fig. 4 — Même représentation que la figure 3, le dispositif de blocage étant verrouillé.

Fig. 5 — Représenté la pédale en élévation,

vue de profil suivant B.

Fig. 6 — Représente la pédale en coupe A.A.

Fig. 7 — Représente la pédale vue de dessus, le plateau étant enlevé.

L'ensemble, objet de l'invention, comporte deux parties complémentaires à savoir: une pédale *1* proprement dit, montée pivotante autour d'un axe *15* solidaire de l'une des manivelles du pédalier, et d'un cale-pied *16* fixé sous la chaussure *17* du cycliste. La partie de la pédale servant d'appui à la chaussure comporte un plateau plan *2* lequel est solidaire d'un axe *3* qui lui est orthogonal, ainsi qu'à celui de l'axe *15* de la pédale. Ce plateau *2* comporte à son pourtour une forme permettant l'emboîtement du cale-pied *16* et en son centre de pivotement un verrou *8* maintenu en position par l'intermédiaire d'une tige *10* et d'un ressort *9*. Le verrou permet de maintenir la chaussure en position déverrouillée tout en autorisant un pédalage modéré.

Le support *2* est maintenu en position normale de pédalage à l'aide de butées *7* de formes sphérique, par exemple: d'un dispositif de pression élastique *6*, tel que ressort ou matière élastique, d'un dispositif de serrage *4* et *5*.

Par rotation du pied autour de l'axe *3* l'utilisateur commande la rotation des pièces *2*, *3*, *4*, *5*, *8*, *9*, *10* de part et d'autre de la position normale de pédalage.

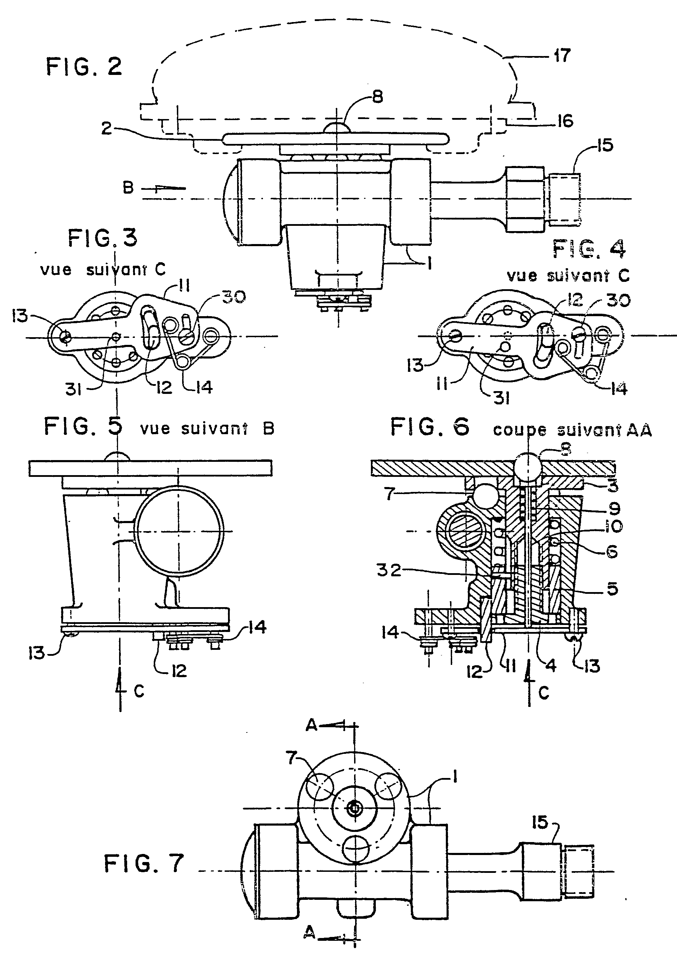

Le verrouillage de la chaussure est obtenu par le déplacement du tiroir *11* à l'aide du doigt *12* solidaire des pièces *3* et *5* par l'intermédiaire du dispositif à rainure *32*. Le tiroir *11* étant dans la position représentée sur la Fig. 4 empêche la tige *10* de se déplacer vers le bas. Dans ce cas le verrou *8* se trouve également bloqué et le cale-pied *16* ne peut se dégager, le verrou *8* étant engagé dans la forme *19*. Le ressort *14* a pour effet de maintenir la pièce *11*, dans la position souhaitée.

La vis *13* sert de centre de rotation de la pièce *11*, et la vis *30* de butée à celle-ci.

Le déverrouillage s'opère par rotation en sens inverse du plateau *2*, le tiroir *11* étant amené dans la position représentée sur la Fig. 3, l'orifice *31* se trouvant sur l'axe de rotation et à l'aplomb de la tige *10* permet à cette dernière de descendre. Le verrou *8* est alors débloqué et permet de libérer la pièce *16* solidaire de la chaussure.

Le cale-pied *16* comporte, sur la face devant être appliquée sur la semelle de la chaussure, un enduit plastique permettant sa mise en place par essai direct de l'utilisateur sur sa machine. La fixation définitive est assurée par les pointes ou les vis *21*.

La pièce *18* comporte un logement *19* du verrou *8* et une butée arrière. Cette pièce peut se déplacer dans le cale-pied *16* et être immobilisée par un système de serrage *20*. Ce dernier dispositif autorise un réglage longitudinal de la chaussure par rapport à la pédale.

La présente description et la forme donnée sur les dessins sont mentionnées à titre indicatif afin d'expliciter le principe de fonctionnement de l'invention, tout autre forme pouvant être conçue à partir du schéma de ce principe de base.

Variante

La planche *IV* représente un modèle variante à celui représenté sur la planche *II*.

Le ressort central est remplacé par trois ressorts *34* placés au droit de chaque butée *7*.

Le système de blocage du cale-pied est analogue à celui du modèle à action progressive décrit plus loin. Toutefois le blocage proprement dit du cale-pied est dans ce cas effectué directement sur celui-ci, par l'intermédiaire de la butée *18* et du tiroir *24*. La fourchette *25* solidaire du plateau *2* commande le déplacement du tiroir *24*. Les butées *33* montées sur le plateau *2* limitent la rotation de ce plateau de part et d'autre de l'axe de pédalage.

Cette variante est représentée par les figures suivantes:

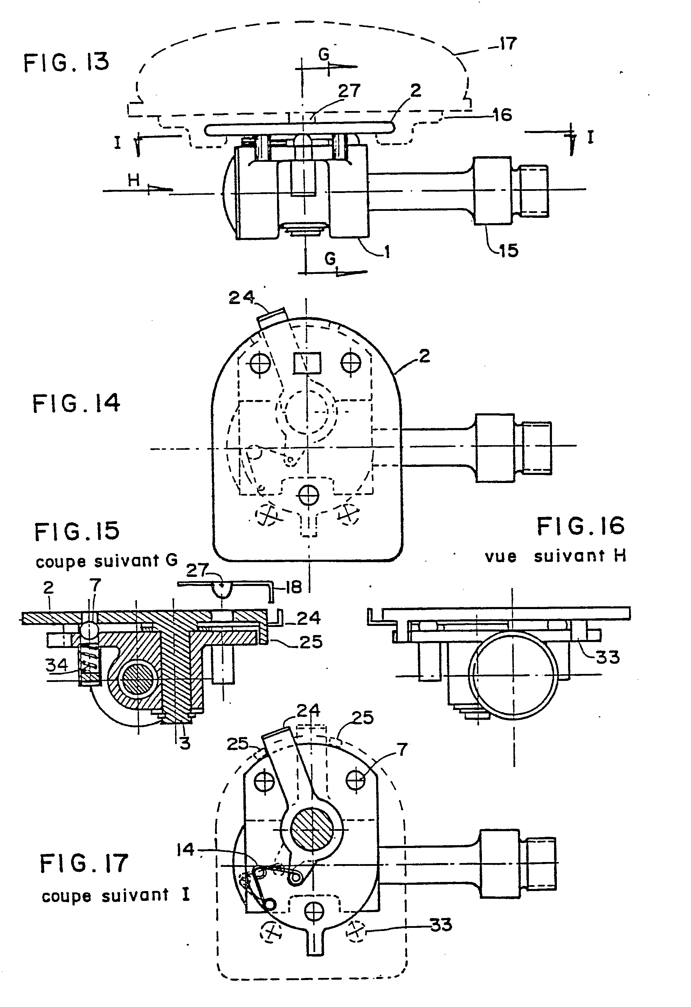

Fig. 13 — Représente en élévation l'ensemble de la pédale et du cale-pied vue de l'avant.

Fig. 14 — Représente la pédale vue de dessus, le cale-pied étant enlevé.

Fig. 15 — Représente la pédale en coupe G.

Fig. 16 — Représente la pédale en élévation vue de profil suivant H.

Fig. 17 — Représente la pédale en coupe suivant I.

Pédale à action progressive

Le dispositif suivant constitue une variante à celui déjà décrit ci-avant et intitulé "pédale à action brusque", il se rapporte au mode d'immobilisation du plateau en position normale.

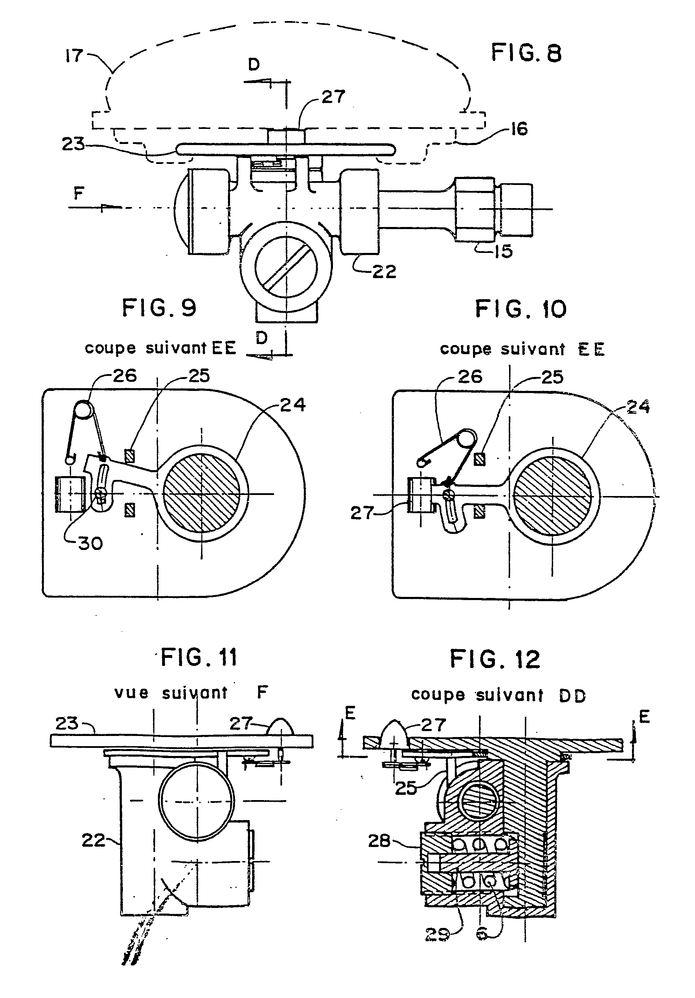

La planche *III* regroupant les figures 8 à 12 illustre cette disposition.

L'axe du plateau *27* comporte un méplat sur lequel vient prendre appui un poussoir *29*, comportant également un méplat, maintenu en contact avec l'axe du plateau *27* par l'action d'un ressort *6* ou d'une matière élastique. La vis *28* permet à l'usager de choisir la pression désirée.

Sous l'action de rotation du plateau, imprimé par le cale-pied, le poussoir recule et son déplacement est sensiblement proportionnel au couple de rotation du plateau. Dans ce cas l'action est dite progressive, car elle est proportionnelle à l'angle de rotation du plateau.

Le rappel du plateau en position normale est automatique par l'action du ressort *6* sur le poussoir *29* et le plateau *23*.

Fig. 8 — Représente en élévation l'ensemble de la pédale, du cale-pied et de la chaussure, vue de l'avant.

Fig. 9 — Représente suivant la coupe EE le système de verrouillage en position "déverrouillé".

Fig. 10 — Même représentation que la figure 9, le système de verrouillage étant en position "verrouillé".

Fig. 11 — Représente la pédale en élévation vue de profil suivant F.

Fig. 12 — Représente la pédale en coupe suivant D.D.

Le système de blocage du cale-pied est analogue au dispositif précédent et comprend un verrou 27 s'escamotant sous le plateau 23 lors de l'introduction ou de l'enlèvement du cale-pied 16 sur le plateau 23.

Lorsque le tiroir 24 est dans la position représentée sur les figures 10 et 12, le verrou 27 ne peut s'effacer et bloque ainsi le cale-pied.

La position du tiroir 24 représenté sur la figure 9 autorise l'effacement du verrou 27 et par conséquent la libération du cale-pied 16.

Le changement de position du tiroir 24 s'effectue par rotation du plateau 23 et par la butée de la fourchette 25 solidaire du corps 22.

Le ressort 26 maintient le tiroir 24 dans la position désirée.

La vis 30 sert de support et de butée au tiroir 24.

## Revendications

1. Ensemble constitué d'une pédale de bicyclette et de son cale-pied dont la pédale comprend un plateau (2) (23) disposé parallèlement à la semelle du soulier du cycliste, et ayant une forme complémentaire à celle du cale-pied pour l'accouplement du cale-pied à la pédale, dans une position normale de pédalage caractérisé en ce que le plateau est solidaire d'un axe (3) de rotation qui est orthogonal à l'axe de rotation de la pédale (15) et au plateau (2) (23), et en ce que le cale-pied a une forme permettant de transmettre au plateau et à son axe des mouvements de rotation alternés de part et d'autre de la position normale de pédalage, et en ce que le pivotement actionne un dispositif de blocage et de déblocage du cale-pied.

2. Ensemble selon la revendication 1, caractérisé par un dispositif de maintenance du plateau (2) dans la position normale de pédalage, constitué de butées (7) solidaires du corps de la pédale (1) et venant s'encastrer dans un orifice de forme complémentaire situé sur le plateau (2), maintenu élastiquement par un dispositif (6) (34) dont la pression est contrôlée par un système de serrage (4), l'ensemble ainsi constitué demandant lors de la rotation du plateau (2) un effort brusque et d'intensité inversement proportionnel à l'angle de rotation nécessaire au plateau pour déclencher le dispositif de blocage ou de déblocage du cale-pied.

3. Ensemble selon la revendication 1, caractérisé par un dispositif de maintenance du plateau (2) (23) dans sa position normale de pédalage, comprenant un poussoir (29) comportant un méplat, lequel est maintenu en contact, sous l'action d'un dispositif élastique (6), avec un autre méplat pratiqué sur l'axe de rotation du plateau (2) (23), la pression du poussoir étant contrôlée par une vis de réglage (28), demandant ainsi à l'usager un effort progressif et proportionnel à l'angle de rotation nécessaire au plateau (2) (23) pour déclencher le dispositif de blocage ou de déblocage du cale-pied.

4. Ensemble selon la revendication 1, caractérisé en ce que le dispositif de blocage comprend un verrou (8) (27) qui est solidaire du plateau ou du cale-pied et qui s'encastre dans une forme complémentaire pratiquée dans l'autre pièce.

5. Ensemble selon la revendication 4, caractérisé en ce qu'il est prévu un dispositif de blocage du verrou (8) (27), blocage obtenu à l'aide d'un tiroir (11) (24) qui, selon sa position, immobilise le verrou, le déplacement du tiroir étant obtenu par un doigt (12) (25) solidaire du plateau (2) (23) lors de la rotation de celui-ci.

6. Ensemble selon la revendication 5, caractérisé en ce qu'il est prévu un dispositif (14, 26) de maintien du tiroir (11) (24) dans l'une des deux positions extrêmes dès que la rotation du plateau a entraîné le tiroir d'un angle au moins égal à la moitié de sa rotation.

7. Ensemble selon la revendication 5, caractérisé en ce que le blocage du cale-pied (16) est obtenu directement par le tiroir (24) empêchant le déplacement d'une butée (18) solidaire du cale-pied.

8. Ensemble selon la revendication 7, caractérisé en ce que la butée (8) est solidaire du cale-pied (16) par l'intermédiaire d'un dispositif de serrage réglable (20), permettant d'ajuster à volonté la position du pied du cycliste sur la pédale.

9. Ensemble selon la revendication 1, caractérisé en ce que le cale-pied (16) fixé sous la chaussure par des pointes ou des vis, présente sur sa face en contact avec la chaussure, un enduit adhésif permettant une mise en place aisée par présentation de la chaussure en position de pédalage.

10. Ensemble selon la revendication 1, caractérisé en ce que la disposition générale des éléments constituant la pédale, permet à celle-ci d'avoir au repos une orientation face à l'utilisateur, facilitant ainsi la mise en place du cale-pied (16).

## Patentansprüche

1. Ein komplex der besteht aus ein Pedal eines Fahrrades und seinen Fuß-Haken dieses Pedal ist gebildet aus eine Scheibe (2) (23) adnorden vergleichlig an die Schuh-Sohle des Radfahrers, die hat eine komplementär form an die Form des Fuß-Hakens, für die Schaltung des Fuß-Hakens mit dem Pedal, in eine normale Stellung des Radfahrens charakterisiert bei die Tatsache daß die Scheibe ist verantwortlich für eine Aksen Drehung (3), die rechtwinklig ist an die Aksen Drehung des Pedals (15) und der Scheibe (2) (23), auch charakterisiert bei die Form des Fuß-Halters erlaubt zu antreiben an die Scheiben und ihre Akse drehende Bewegungen, abwechselnd einer anderseits die normale Stellung des Radfahrens, anderseits, der Dreh-Zapfen antreibt eine Anlage für die Hemmund und die Entriegelung des Fuß-Hakens.

2. Komplex nach die Forderung 1, charakterisiert, mit einer Anlage für den Nachshuß der Scheibe (2), in einer normalen Stellung des Radfahrens, bestehend auf einen Haufel-Pflug (7), den recht verantwortlich ist mit dem Körper des Pedals (1) eingesetzt in einer Offnungwelche Form komplementär ist — die liegt auf der Scheibe (2), die Scheibe ist elastischlig gehält mit einer Anlage (6) (34) welcher Drück mit ein anziehen System (4) kontrolliert wird, der komplex so bestellt bittet, während der Drehung der Scheibe (2) eine barsche Anstrengung, welche Intensität umgekehrt proportional an die Kante der Drehung notwendig für die Scheibe aus zu lösen die Vorrichtung für die Hemmung und die Entriegelung des Fuß-Halters.

3. Komplex nach die Forderung 1, charakterisiert mit einer Anlager der Hatung der Scheibe (2) (23) in normale Stellung des Radfahrens, diese Anlage besteht aus ein Drücker (29), mit einer Abflachrung der Fülhung hat mit einer elastischen Anlage (6), es gibt eine andere Abflachrung angebracht über die Acksendrehung der Scheibe (2) (23), der Drück des Drückers kontrolliert wird mit Hilfe einer Stell-Schraube (28), so bittet der System von dem Benutzer eine zunemende Anstrengung, die proportional ist an den Winkel der Drehung, notwendig für die Scheibe (2) (23) zu lösen die Vorrichtung für die Hemmung und die Entriegelung des Fuß-Halters.

4. Komplex nach die Forderung 1, der besteht aus einen Riegel (8) (27) den verantwortlich ist mit der Scheibe oder dem Fuß-Haker, und der Riegel eingesetzt ist in einer Offnung, der lieg auf dem anderen Stück.

5. Komplex nach die Forderung 4, charakterisiert bein eine Vorrichtung einer Hemmung des Riegels (8) (27), das ist erlängt mit Hilfe eines Schubladers (11) (24) der, nach seine Stellung, den Riegel unbeweglich macht, die Umstellung des Schubladers wird mit einem Finger (12) (25) verantwortlich mit der Scheibe erlängt (2) (23) während die Acksendrehung der Scheibe.

6. Komplex nach die Forderung 5, charakterisiert bei eine Vorrichtung (14) (26) der Haltung des Schubladers (11) (24) vorhergesehen wird, in einer von die 2 außersten Vorrichtungen sobalt die Acksendrehung der Scheibe hat der Schublader einer kanter mindestens gleich die Hälfte seine Acksen Drehung mitgenohmen.

7. Komplex nach die Forderung 5, die Hemmung des Fuß-Hakens (16) ist direkt ergelängt von dem Schublader (24) dem abhät von der Umstellung des Häufelpflug (18), verantwortlich mit dem Fuß-Hakens.

8. Komplex nach die Forderung 7, der Häufelpflug (8) ist verantwortlich mit dem Fuß-Haken (16) durch Vermittlung einer Vorrichtunger regulierbar Drücken (20), daß erlaubt die Stellung des Fuß des Radfahrers über dem Pedal nach Wunsch zu einrichten.

9. Komplex nach die Forderung 1, charakterisiert bei ein Fuß-Haken (16) unter dem Schuh befestigen mit Stachel oder Schraube, der hat über seine Seite die in Kontakt mit dem Schuh ist, ein Klebriger Belag der elaubt eine einfache Bereit Stellung mit der Vorstellung des Schuhes in Radfahrens Stellung.

10. Komplex nach die Forderung 1, charakterisiert bei die allgemeine Stellung der Bauteiler des Pedals, diese Stellung erlaubt das Pedal um — brachland — eine Orientierung angesisichts des Benutzers zu haben, so erleichtert das, die Bereitstellung des Fuß-Hakens (16).

## Claims

1. The assembly consists of a bicycle pedal and its toe-clip. The pedal comprises a plate (2) (23) set parallel with the sole of the cyclist's shoe, and being of a similar form to the toe-clip, in order to fasten the toe-clip to the pedal in a normal pedalling position. The plate is solid with an axis of rotation (3) which is at right angles with the axis of rotation of the pedal (15) and with the plate (2) (23). The toe-clip also has a shape which allows alternating rotatory movements in either direction from the normal pedalling position to be transferred to the plate and to its axis, and this pivoting effect actuates the tightening or loosening mechanism of the toe-clip.

2. Assembly according to application 1, exhibits a device to maintain the plate (2) in the normal pedalling position and consisting of stops (7) solid with the body of the pedal (1) and fitting into an opening of a similar shape in the plate (2), flexibly held by a device (6) (34), the pressure of which is controlled by a tightening system (4). When the plate (2) is rotated, the unit thus assembled requires a sudden effort, the intensity of which is in inverse ratio with the angle of rotation necessary for the plate to activate the locking or unlocking device of the toe-clip.

3. Assembly according to application 1, exhibiting a bolting device to hold the plate (2) (23) solidly in its normal pedalling position, and consisting of a push-rod (29) with a flat end which is held in contact with a corresponding flat part cut into the axis of rotation of the plate (2) (23), by means of an elastic device (6). The pressure of the push-rod is controlled by an adjusting screw (28), thus requiring from the user a progressive effort, proportional to the angle of rotation necessary for the plate (2) (23) to set off the locking and unlocking device of the toe-clip.

4. Assembly according to application 1, showing that the blocking device consists of a lock (8) (27) which is solid with the plate or the toe-clip, and which fits into a similar shape out into the other part.

5. Assembly according to application 4, showing that the lock (8) (27) has a blocking device of its own. The blocking is performed by means of a locking pin (11) (24), which, depending on its position may stop the lock. The sliding of the pin during the rotation of the plate is effected by a catch (12) (25) solid with the plate (2) (23).

6. Assembly according to application 5, showing that there is a device (14) (26) to maintain the locking pin (11) (24) in one of its two extreme positions as soon as the rotation of the plate has moved the pin through an angle of at least one half of its rotation.

7. Assembly according to application 5, showing that the toe-clip (16) is locked directly by the locking pin (24) which prevents the movement of a stop on the toe-clip (18).

8. Assembly according to application 7, showing that the stop (8) is made solid with the toe-clip (16) by an adjustable tightening device (20) allowing the cyclist to adjust the position of his foot on the pedal as he or she wishes.

9. Assembly according to application 1, showing that the toe-clip (16) is fixed under the shoe by spikes or screws and has an adhesive strip on its surface in contact with the shoe, allowing an easy positioning of the shoe when presented in pedalling position.

10. Assembly according to application 1, showing the general arrangement of the basic elements of the pedal, which allows it to rest in a position facing the user, and makes the positioning of the toe-clip (16) easy.

0012097

FIG. 1

0 012 097

FIG. 2

FIG. 3
vue suivant C

FIG. 4
vue suivant C

FIG. 5  vue suivant B

FIG. 6  coupe suivant AA

FIG. 7

2

0012097

FIG. 8

17

D

27

23

16

F

15

22

FIG. 9
coupe suivant EE

26    25
24

30

FIG. 10
coupe suivant EE

26    25
24

27

FIG. 11
vue suivant F

23
27
22

FIG. 12
coupe suivant DD

E    27    E

25

28

29    6

3

FIG. 13

FIG. 14

FIG. 15

coupe suivant G

FIG. 16

vue suivant H

FIG. 17

coupe suivant I